# EUROPEAN PATENT APPLICATION

(11) **EP 1 637 422 A1**
(43) Date of publication of application: **22.03.2006**
(21) Application number: 05108432.5
(22) Date of filing: 14.09.2005
(51) Int. Cl.: B60T 8/17, B60T 8/88, B60T 13/74, H02J 1/08

(54) **Electromechanical braking system with electrical energy back-up**

(30) Priority: 17.09.2004 US 943536
(71) Applicant: Goodrich Corporation, Charlotte, North Carolina 28217-4578 (US)
(72) Inventor: Ralea, Mihai, Boonton Township, NJ 07005 (US)
(74) Representative: Hilleringmann, Jochen

(57) **Abstract**

An electromechanical braking system (30) is provided that includes an electromechanical brake actuator (44) for converting an electrical drive signal into mechanical energy to effect braking on a wheel (36) of a vehicle. The electromechanical brake actuator (44) is operative based at least in part on a DC supply voltage typically provided by a main supply source (60L,60R). The system further includes an electrical energy back-up system (64,66) which capacitively stores electrical energy and provides the stored electrical energy as the DC supply voltage in an absence of the main supply source (60L,60R).

## Description

### Technical Field

The present invention relates generally to brake systems for vehicles, and more particularly to an electromechanical braking system suitable for use in aircraft.

### Background of the Invention

Various types of braking systems are known. For example, hydraulic, pneumatic and electromechanical braking systems have been developed for different applications. In the past, however, it has not been fully shown to employ reliably an electromechanical braking system in a vehicle such as an aircraft.

An aircraft presents a unique set of operational and safety issues. For example, if one or more engines fail on an aircraft, it is quite possible that there will be a complete or partial loss of electrical power. In the case of an electromechanical braking system, issues arise as to how the brakes will be actuated in an emergency takeoff or landing.

In view of such shortcomings associated with conventional electromechanical braking systems, there is a strong need in the art for an electromechanical braking system which may be employed reliably even on a vehicle such as an aircraft.

### Summary of the Invention

According to the present invention, an electromechanical braking system is provided. The system includes an electromechanical brake actuator for converting an electrical drive signal into mechanical energy to effect braking on a wheel of a vehicle. The electromechanical brake actuator is operative based at least in part on a DC supply voltage typically provided by a main supply source. The system further includes an electrical energy back-up system. The back-up system capacitively stores electrical energy and provides the stored electrical energy as the DC supply voltage in an absence of the main supply source.

As a result, the electromechanical braking system remains operational even in the event of complete or partial loss of power within the vehicle. In the case of an aircraft, the back-up system stores sufficient power to provide braking even in the event of a rejected take off.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention may be employed. Other objects, advantages and novel features of the invention will become apparent from the following detailed description of the invention when considered in conjunction with the drawings.

### Brief Description of the Drawings

Fig. 1 is an environmental view of an exemplary electromechanical braking system in an aircraft in accordance with the present invention; and
Fig. 2 is a general block diagram of the exemplary electromechanical braking system in accordance with the present invention;

### Detailed Description of the Invention

The present invention will now be described with reference to the drawings, wherein like reference labels are used to refer to like elements throughout.

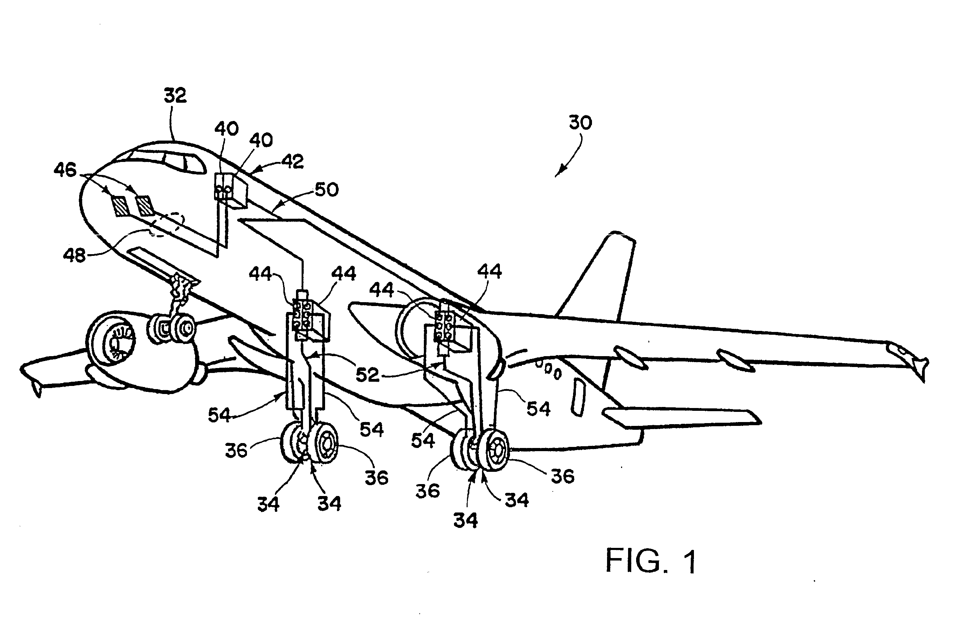

Referring initially to Fig. 1, an electromechanical braking system 30 in accordance with the present invention is shown within a jet aircraft 32. The system 30 may be designed as a brake-by-wire system compatible with the performance, safety, electrical and mechanical interfaces, redundancy, and other requirements of an aircraft such as a commercial transport. Details of such type systems can be found in commonly assigned U.S. Patent Nos. 6,402,259 and 6,296,325, for example. The entire disclosures of U.S. Patent Nos. 6,402,259 and 6,296,325 are incorporated herein by reference.

The system 30 preferably operates based on power provided from a plurality of power sources. Power is preferably segregated within the system 30 such that the system 30 is capable of providing satisfactory braking even upon failure of one or more power sources. Moreover, the system 30 preferably has built in redundancy which allows the system 30 to continue to operate satisfactorily even in the case of failure of one or more system components.

In the exemplary embodiment, the system primary components include four electromechanical brake actuators 34. The aircraft 32 in the present embodiment includes a pair of wheels 36 mounted to a landing gear under the left wing of the aircraft and a pair of wheels 36 mounted to a landing gear under the right wing of the aircraft. Each wheel 36 includes a respective brake actuator 34 for providing braking action thereto.

The system 30 preferably further includes redundant digital brake system control units (BSCUs) 40. The BSCUs 40 carry out the brake control and antiskid processing functions. The BSCUs 40 are located in the electronics bay 42 of the aircraft 32, and preferably are packaged into one enclosure with a firewall therebetween.

The system 30 also includes four electromechanical actuator controllers (EMACs) 44 which convert brake clamp force commands from the BSCUs 40 to servo motor control signals which ultimately provide actuator braking forces. The EMACs 44 preferably are packaged similar to the BSCUs 40, with two EMACs 44 per enclosure located near the top of the gear strut of each respective landing gear.

A pilot of the aircraft 32 provides brake commands to the braking system 30 via a pair of left and right brake pedal transducers 46 included in the cockpit. The transducers 46 provide brake command signals to the BSCUs 40 which are proportional to the desired amount of braking. The output of each transducer 46 is coupled to the BSCUs 40 via a cable 48. Communications between the BSCUs 40 and the EMACs 44 occur over a communication bus 50 connected therebetween. Each of the EMACs 44 is designed to provide electrical power to the electromechanical actuators within the corresponding brakes 34 via a respective power cable 52.

In addition, each brake actuator 34 may have an associated torque sensor and wheel speed sensor (not shown). The outputs of the sensors are provided to the respective EMACs 44 via cables 54. The EMACs 44 condition the signals and provide them to the BSCUs 40 as feedback signals to carry out the brake control and antiskid processing functions.

As will be generally understood by those having ordinary skill in the art of electromechanical braking systems, the BSCUs 40, EMACs 44 and brake actuators 34 are powered and/or driven based on one or more electrical power sources. The electrical power serves to power the corresponding circuitry within the BSCUs 40 and EMACs 44, as well as directly or indirectly provide drive signals for driving the ram within the actuators 34, etc.

Thus, regardless of the particular architecture of the braking system 30, e.g., number of BSCUs 40, number of EMACs 44, number of brake actuators 34, number of individual power sources, degrees of redundancy, etc., the braking system 30 will require at least one power source so as to render the system 30, and the brake actuators 34 particularly, operative.

Accordingly, the braking system of the present invention is described herein in accordance with a particular exemplary architecture. However, those having ordinary skill in the art will appreciate that the particular architecture is not germane to the invention in its broadest sense. Rather, the invention relates to the manner in which an electrical energy back-up is provided within the system so as to ensure operating power is available to the braking system even in the event a power source was to fail.

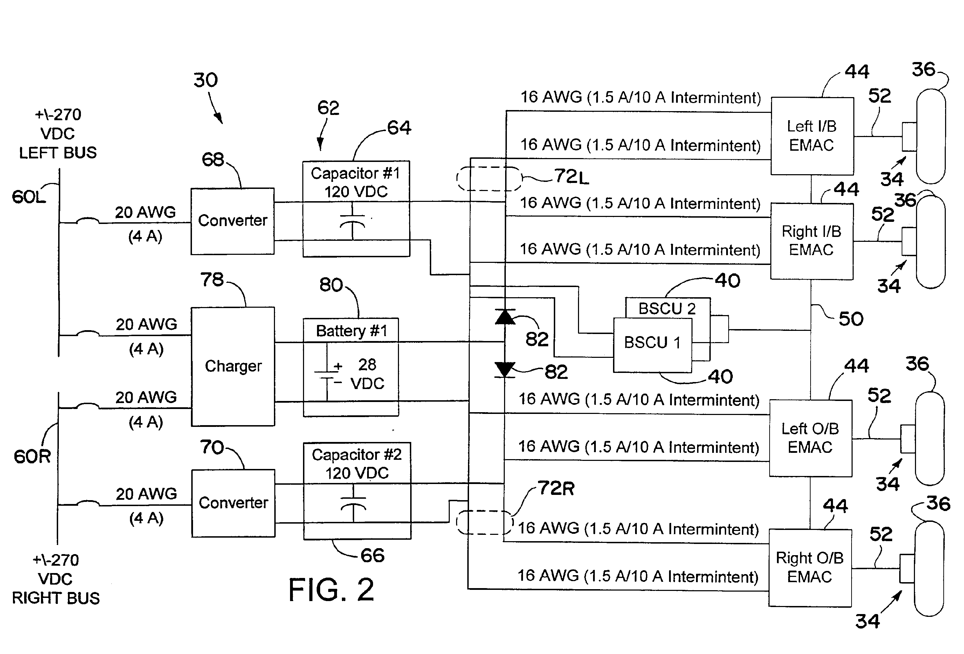

Turning now to Fig. 2, a simplified block diagram of the braking system 30 is shown. In the exemplary embodiment, the aircraft 32 includes multiple DC power busses 60L and 60R serving as respective main supply sources. The power busses 60L and 60R are independent from one another in that if one buss was to fail, the other buss would remain functional. The busses 60L and 60R in the exemplary embodiment are at ±270 volts DC, although the system certainly could be designed to operate at some other voltage without departing from the scope of the invention.

The braking system 30 includes an electrical energy back-up system 62 which serves to ensure operating power is available to the braking system 30 even in the event either of the power busses 60L or 60R was to fail. The back-up system 62 includes a first capacitor bank 64 and a second capacitor bank 66. In addition, the back-up system includes a first converter 68 and a second converter 70.

The power buss 60L supplies DC power to the input of the first converter 68. In the exemplary embodiment, the first converter 68 is a DC-to-DC converter which converts the voltage from the power buss 60L to 120 VDC and outputs the converted voltage across supply rails 72L. Similarly, the power buss 60R supplies DC power to the input of the second converter 70. The second converter 70 is a DC-to-DC converter which converts the voltage from the power buss 60R to 120 VDC and outputs the converted voltage across supply rails 72R.

In the exemplary embodiment, EMACs 44 for the left and right inner brakes are powered at least in part by the DC supply voltage provided across the supply rails 72L. In like manner, EMACs 44 for the left and right outer brakes receive operating power at least in part from the DC supply voltage provided across the supply rails 72R. The operating power provided on the supply rails 72L and 72R and the EMACs 44 are designed so as to allow the EMACs 44 to control and operate the brake actuators 34 to provide braking action of the wheels 36. The particular design is not germane to the invention, and therefore will not be discussed in detail herein. However, a person having ordinary skill in the art will readily appreciate the manner for carrying out such design based on the disclosure herein.

According to the present invention, the first capacitor bank 64 is electrically coupled across the supply rails 72L. Likewise, the second capacitor bank 66 is electrically coupled across the supply rails 72R. As a result, the DC supply voltages provided across the supply rails 72L and 72R serve to charge the first and second capacitor banks 64 and 66, respectively, to the level of the DC supply voltage. Electrical energy is thereby stored in the first and second capacitor banks 64 and 66, and serves as a back-up energy source should power fail on either of the power busses 60L or 60R.

For example, in the event power on the power buss 60L was to fail due to engine failure, faulty wiring, etc., the first capacitor bank 64 would present the desired 120 VDC across the supply rails 72L. Such power could then be used by the EMACs 44 to effect emergency braking of the left and right inner wheels 36. Similarly, if the power buss 60R was to fail, the second capacitor bank 64 would present the desired 120 VDC across the supply rails 72R. The power could then be used by the EMACs 44 to effect emergency braking of the left and right outer wheels 36.

Sizing of the first and second capacitor banks 64 and 66 will depend of course on the operating requirements of the system 30. Specifically, depending on the type of vehicle, size, actuator design, etc., the system 30 will typically require a given amount of electrical power on the supply rails 72L and 72R for a given amount of time. Such amounts may be determined theoretically or empirically as will be readily understood by those having ordinary skill in the art. In the case of an aircraft where size and weight may be critical, the first and second capacitor banks 64 and 66 are sized so as to store sufficient back-up electrical energy to allow the braking system to effect sufficient braking for at least one rejected take off. More preferably, the first and second capacitor banks 64 and 66 are sized to provide sufficient energy needed for a complete stop including anti-skid brake control and braking for ground maneuvering after the stop.

As an example, each capacitor bank 64 and 66 may be sized to provide approximately 18 watt hours (Wh) energy which is sufficient to provide braking power for a rejected take off. The approximate weight for such a capacitor bank is twelve pounds and may have a charge time of approximately two minutes. Each capacitor bank 64 may be made up of one or more capacitors. Multiple capacitors could be connected in parallel and/or series as will be appreciated.

The particular capacitance-voltage combination, i.e., total stored energy, offered by the capacitor bank(s) in a given application would preferably be optimized for the given application as will be appreciated.

In the exemplary embodiment, the BSCUs 40 also are powered at least in part by the voltage across the supply rails 72L and/or 72R. Consequently, even if the power was to fail on either of the power busses 60L or 60R, the BSCUs 40 could provide brake control functions, antiskid control functions, etc., based on the back-up energy stored in the capacitor banks 64 and/or 66. In Fig. 2, the BSCUs 40 are shown as being powered by the supply rails 72L but it will be appreciated that other configurations are possible without departing from the scope of the invention.

According to another aspect of the invention, the electrical energy back-up system 62 further includes a charger 78 which receives power from each of the power busses 60L and 60R (in the event one power buss was to fail). The charger 78 outputs a charging current to a rechargeable battery 80 also included in the back-up system 62. In the exemplary embodiment, the output of the rechargeable batter 80 is coupled to each of the supply rails 72L and 72R via reverse polarity protection diodes 82.

During parking brake conditions, the vehicle may be parked for extended periods of time and there may be no power provided on the power busses 60L and 60R. Nevertheless, it may be desirable/necessary to still provide power within the system 30 in order to effect and/or maintain parking brake operations. In such cases of prolonged periods without power on the power busses 60L and 60R, the energy stored in the capacitor banks 64 and 66 may not be sufficient and/or may tend to dissipate. The rechargeable battery 80 is useful in such condition to maintain and deliver sufficient power to the EMACs 44 to engage and/or maintain parking brake operation.

A variety of types of rechargeable battery 80 may be utilized in accordance with the invention. In an exemplary embodiment, the battery 80 is a 28V rechargeable lithium battery.

Although the invention has been shown and described with respect to certain preferred embodiments, it is obvious that equivalents and modifications will occur to others skilled in the art upon the reading and understanding of the specification. For example, although the present invention has been described primarily in the context of an aircraft, it will be appreciated that the invention has utility in any type of vehicle utilizing electromechanical braking. The invention is not intended to be limited to an aircraft in its broadest sense.

The present invention includes all such equivalents and modifications, and is limited only by the scope of the following claims.

## Claims

1. An electromechanical braking system, comprising:
- at least one electromechanical brake actuator for converting an electrical drive signal into mechanical energy to effect braking on a wheel of a vehicle, the at least one electromechanical brake actuator being operative based at least in part on a DC supply voltage typically provided by a main supply source; and
- an electrical energy back-up system which capacitively stores electrical energy and provides the stored electrical energy as the DC supply voltage in an absence of the main supply source.

2. The electromechanical braking system of claim 1, wherein the electrical energy back-up system comprises a bank of capacitors.

3. The electromechanical braking system of claim 1, wherein the vehicle comprises an aircraft having a plurality of electromechanical brake actuators, and the electrical energy back-up system comprises a plurality of banks of capacitors.

4. The electromechanical braking system of claim 2 or 3, wherein a first bank of capacitors serves to provide the DC supply voltage to at least one of the electromechanical brake actuators, and a second bank of capacitors serves to provide the DC supply voltage to at least another of the electromechanical brake actuators.

5. The electromechanical braking system of claim 3 or 4, wherein the first bank of capacitors and second bank of capacitors are configured to receive electrical energy to be stored from independent sources.

6. The electromechanical braking system of any one of claims 1 to 5, wherein the vehicle comprises an aircraft and the electrical energy back-up system is sized to store electrical energy in sufficient amount to provide braking for a rejected take off.

7. The electromechanical braking system of any one of claims 1 to 6, wherein the electrical energy back-up system further comprises a battery for providing the DC supply voltage under a parking brake condition.

8. The electromechanical braking system of any one of claims 1 to 7, wherein the system comprises a brake system control unit for carrying out brake control functions on the vehicle, and an electromechanical actuator controller for receiving an electrical drive control signal from the brake system control unit and converting the electrical drive control signal to the electrical drive signal provided to the electromechanical brake actuator.

9. The electromechanical braking system of claim 8, wherein at least one of the brake system control unit and electromechanical actuator controller is operative based at least in part on the DC supply voltage.

10. The electromechanical braking system of claim 9, wherein both the brake system control unit and the electromechanical actuator controller are operative based at least in part on the DC supply voltage.

11. A method of providing braking in an electromechanical braking system having at least one electromechanical brake actuator for converting an electrical drive signal into mechanical energy to effect braking on a wheel of a vehicle, the at least one electromechanical brake actuator being operative based at least in part on a DC supply voltage typically provided by a main supply source, the method comprising the steps of:
- capacitively storing electrical energy; and
- providing the stored electrical energy as the DC supply voltage in an absence of the main supply source.
